Europäisches Patentamt

European Patent Office

Office européen des brevets

(19)

(11) Numéro de publication : **0 066 142 B1**

(12) **FASCICULE DE BREVET EUROPÉEN**

(45) Date de publication du fascicule du brevet :
02.01.86

(21) Numéro de dépôt : **82104191.0**

(22) Date de dépôt : **13.05.82**

(51) Int. Cl.⁴ : **B 65 G 47/71**

(54) Procédé et dispositif pour dédoubler une file de produits solides identiques.

(30) Priorité : **22.05.81 FR 8110259**

(43) Date de publication de la demande :
**08.12.82 Bulletin 82/49**

(45) Mention de la délivrance du brevet :
**02.01.86 Bulletin 86/01**

(84) Etats contractants désignés :
**BE CH DE GB IT LI NL**

(56) Documents cités :
GB-A- 1 081 923
US-A- 3 058 570
US-A- 3 115 961
US-A- 3 306 425
US-A- 3 614 168
US-A- 3 685 632

(73) Titulaire : **BISCUITERIE NANTAISE - BN Société Anonyme dite**
**Place François II**
**F-44200 Nantes (Loire-Atlantique) (FR)**

(72) Inventeur : **Cossé, Lionel**
**13 rue Belleville**
**F-44100 Nantes (Loire-Atlantique) (FR)**

(74) Mandataire : **Simonnot, Bernard et al**
**Cabinet Simonnot 49, Rue de Provence**
**F-75442 Paris Cedex 09 (FR)**

Jouve, 18, rue St-Denis, 75001 Paris, France

## Description

La présente invention concerne un procédé pour dédoubler une file de produits solides identiques, tels que des sachets de biscuits, pendant leur transfert entre un appareil débiteur amont et deux appareils récepteurs aval. L'invention couvre en outre un dispositif pour la mise en œuvre du procédé ci-dessus.

Dans le domaine de la production en série, on sait qu'il est fréquemment nécessaire de dédoubler une file de produits pendant leur transfert entre deux machines consécutives faisant partie d'une chaîne de fabrication, en particulier dans le cas où la capacité de la machine aval est nettement plus faible que le débit de la machine amont. A cet effet, on a déjà mis au point des dispositifs mécaniques ou électromécaniques destinés à orienter les produits vers la gauche ou la droite par rapport à leur direction d'origine. Mais ces dispositifs présentent de nombreux inconvénients, notamment une cadence de travail limitée et une usure rapide pouvant entraîner une détérioration des produits en cas de panne ou de mauvais fonctionnement.

Dans ce type de dispositif, on connaît plus particulièrement de par le brevet US-A-3 115 961, une machine de tri et de distribution d'articles transportés depuis un convoyeur d'entrée et dirigés sélectivement sur deux transporteurs de sortie par l'intermédiaire d'un dispositif électromécanique. Les transporteurs de cette machine sont sous la forme de rouleaux fous alignés de manière à former un plan général incliné entre l'entrée unique et les deux sorties. Selon le brevet ci-dessus, les articles provenant de l'appareil amont passent sur l'arête d'un dièdre dont chaque plan est formé par la partie supérieure de rouleaux, ladite arête étant alignée avec l'axe de la file d'articles, de telle sorte que ces derniers se placent en équilibre sur cette arête, elle-même constituée par des rouleaux. On fait alors basculer ces articles sur une face de déversement ou l'autre du dièdre au moyen de deux bras articulés agissant successivement et commandés par un ensemble de détecteur et de solénoïdes. On transporte ensuite séparément les articles ainsi sélectionnés et déversés, jusqu'aux appareils aval respectifs. Une telle machine est donc du type électromécanique rappelé plus haut avec ses inconvénients et ne conviendrait pas pour donner une solution convenable et fiable au problème du dédoublement de files de produits fragiles tels que des sachets de biscuits.

La présente invention vise donc à remédier aux divers inconvénients ci-dessus en fournissant un procédé et un dispositif selon les préambules des revendications 1 et 3 basés sur l'état de la technique connu du document US-A-3 115 961 et permettant de dédoubler une file de produits sans qu'aucune pièce mécanique ne soit en contact avec ces derniers, de telle sorte que toute usure éventuelle est réduite à une valeur pratiquement nulle et ne peut entraîner aucun déchet, tout en permettant d'atteindre des cadences élevées.

Conformément à l'invention, le procédé pour dédoubler une file de produits solides identiques pendant leur transfert entre un appareil débiteur amont et deux appareils récepteurs aval, les produits issus de l'appareil débiteur étant guidés en file et reposant à plat par leur face la plus large, procédé dans lequel on amène les produits provenant de l'appareil amont à passer successivement sur l'arête d'un dièdre, sensiblement alignée avec l'axe de la file guidée, en leur conférant une vitesse rectiligne minimale, de telle sorte qu'ils se mettent sensiblement en équilibre sur ladite arête, l'on fait basculer chacun des produits sur une face de déversement ou l'autre du dièdre, et l'on transporte séparément les produits déversés jusqu'aux deux appareils aval respectifs, est caractérisé en ce que l'on fait basculer lesdits produits en appliquant sélectivement sur la face supérieure du produit en équilibre sur ladite arête un jet d'air comprimé orienté vers la face de déversement choisie.

Selon une autre caractéristique du procédé, on oriente le jet d'air alternativement vers les deux faces du dièdre de façon automatique.

Pour la mise en œuvre du procédé ci-dessus, le dispositif selon l'invention est du type comprenant essentiellement un déversoir comportant une entrée disposée en regard de l'extrémité aval d'un transporteur d'entrée associé à l'appareil débiteur amont et deux sorties disposées chacune en regard de l'extrémité amont d'un transporteur de sortie associé à l'un des appareils récepteurs aval, l'entrée du déversoir se présentant sous la forme d'un dièdre dont l'arête est sensiblement alignée avec l'axe du transporteur d'entrée, ledit dispositif étant caractérisé par le fait que l'entrée du déversoir est elle-même sensiblement alignée avec l'axe de symétrie du brin actif de l'extrémité aval du transporteur d'entrée, que chacune des deux faces du dièdre est raccordée à un toboggan dont l'extrémité inférieure forme l'une des sorties du déversoir, et qu'un distributeur relié à une source d'air comprimé est monté transversalement au-dessus du dièdre et comporte deux buses d'éjection d'air orientées chacune vers l'une des faces du dièdre et obturables séparément.

Selon d'autres caractéristiques du dispositif :

— une électrovanne est associée à chaque buse et est commandée à distance ;

— les électrovannes sont commandées par un ensemble de calcul électronique, éventuellement sous la dépendance d'un détecteur de présence des produits ;

— le distributeur comprend un conduit transversal fixe, continuellement alimenté en air comprimé et comportant au niveau de sa face inférieure deux orifices ménagés chacun à l'aplomb de l'une des faces du dièdre, et un manchon rotatif entourant le conduit avec un faible jeu au niveau de la face inférieure de ce dernier et comportant des lumières périphériques alternées ménagées respectivement en regard des orifices du conduit, la rotation du manchon pouvant être synchronisée avec le mouvement du transporteur d'entrée.

D'autres caractéristiques et avantages de la présente invention ressortiront mieux de la description qui va suivre, faite en regard des dessins annexés sur lesquels :

la figure 1 représente une vue en perspective schématique partielle d'une forme de réalisation préférée d'un dispositif illustrant le procédé selon l'invention, et

la figure 2 représente une vue en perspective schématique d'un détail de la forme de réalisation représentée sur la figure 1 ;

Sur ces dessins, les mêmes références désignent les mêmes éléments.

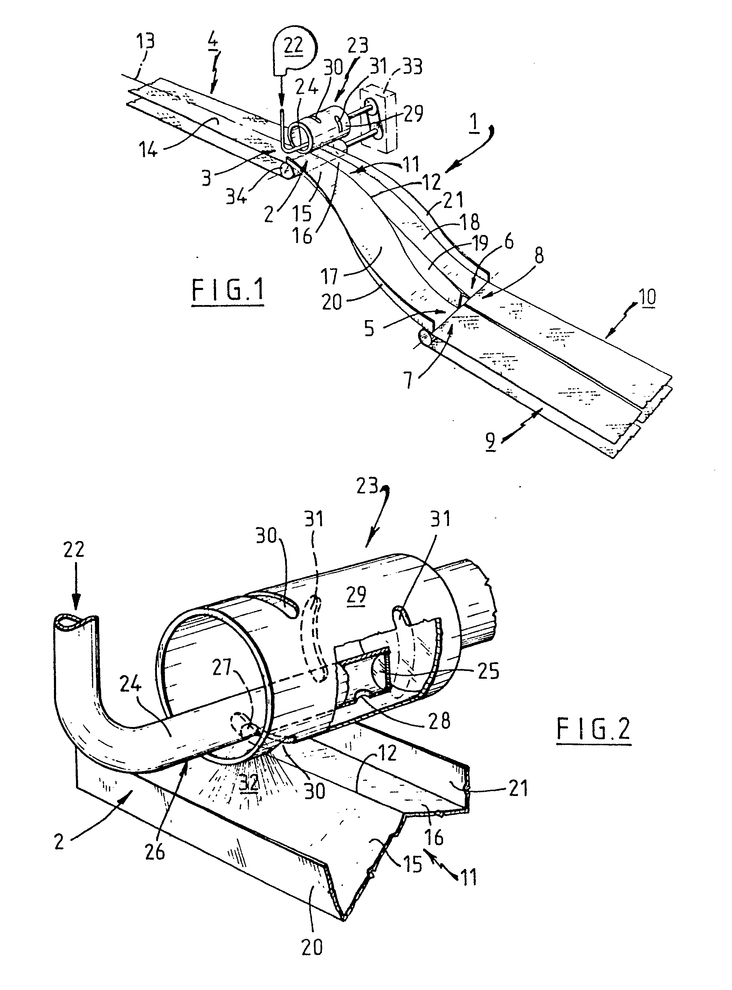

En se référant aux figures 1 et 2, le procédé pour dédoubler une file de produits solides identiques (non représentés) pendant leur transfert entre un appareil débiteur amont (non représenté) et deux appareils récepteurs aval (non représentés) est du type dans lequel les produits issus de l'appareil débiteur sont guidés en file et reposent à plat par leur face la plus large. Par exemple, les produits peuvent être des sachets de biscuits provenant d'une machine d'enveloppage et destinés à deux machines d'empaquetage différentes ou à deux entrées d'une machine d'empaquetage unique. Comme cela sera mieux compris d'après la suite de la présente description, les produits peuvent être d'une nature quelconque pouvru que leur forme géométrique soit sensiblement constante et que leur poids ne varie que dans les limites compatibles avec le matériel utilisé. De préférence, les produits représentent à la fois une large face inférieure d'appui et une large face supérieure.

En premier lieu, le dispositif pour la mise en œuvre du procédé selon l'invention comprend un déversoir 1 comportant une entrée 2 disposée en regard de l'extrémité aval 3 d'un transporteur d'entrée 4 associé à l'appareil débiteur amont et deux sorties 5 et 6 disposées chacune en regard de l'extrémité amont 7, 8 d'un transporteur de sortie 9, 10 associé à l'un des appareils récepteurs aval.

Il est clair que les deux transporteurs de sortie 9 et 10 peuvent correspondre à deux transporteurs séparés alimentant des machines différentes ou à deux files voisines sur un même transporteur alimentant deux entrées d'une machine unique. Ces transporteurs, notamment le transporteur d'entrée 4, peuvent être du type à bande, à tapis ou à chaîne à taquets.

L'entrée 2 du déversoir 1 se présente sous la forme d'un dièdre 11 dont l'arête 12 est sensiblement alignée avec l'axe de symétrie 13 du brin actif 14 de l'extrémité aval 3 du transporteur d'entrée 4. Dans le cas où le transporteur d'entrée 4 4 est horizontal, l'arête 12 est généralement horizontale, mais présente de préférence une forme légèrement convexe ou bombée vers le haut. En outre, chacune des deux faces 15 et 16 du dièdre il est raccordé à un toboggan 17, 18 dont l'extrémité inférieure forme l'une des sorties 5 et 6 du déversoir 1. L'arête 12 du dièdre 11 est prolongée par une barrière de séparation et de guidage 19 au niveau des tobogans 17 et 18 , tandis qu'un rebord de guidage latéral continu 20, 21 borde extérieurement chacune des faces 15 et 16 du dièdre et chacun des toboggans 17 et 18. Le déversoir est de préférence constitué par un métal, par exemple un acier inoxydable, les deux faces 15 et 16 ainsi que les toboggans 17 et 18 présentant des dimensions compatibles avec celles des produits à traiter.

En second lieu, le dispositif selon l'invention comprend une source 22 d'air comprimé reliée à un distributeur 23 monté transversalement au-dessus du dièdre 11 et comportant deux buses d'éjection d'air orientées chacune vers l'une des faces 15 et 16 du dièdre et obturables séparément, par exemple au moyen d'une électrovanne associée à chaque buse et commandée à distance. Les électrovannes peuvent être commandées par un ensemble de calcul électronique, éventuellement sous la dépendance d'un détecteur de la présence des produits monté au niveau de l'extrémité aval 3 du transporteur d'entrée 4.

Dans ces conditions, le procédé selon l'invention consiste, d'une part, à amener les produits provenant de l'appareil amont, c'est-à-dire les produits guidés en file sur le transporteur d'entrée 4, à passer successivement sur l'arête 12 du dièdre 11, qui est sensiblement alignée avec l'axe 13 de la file ou du transporteur 4, en leur conférant une vitesse rectiligne minimale orientée selon l'axe du transporteur, de telle sorte que lesdits produits se mettent l'un après l'autre sensiblement en équilibre sur ladite arête 12 et, d'autre part, à faire basculer chacun des produits sur une face de déversement ou l'autre, 15 ou 16, du dièdre 11, en appliquant sélectivement sur la face supérieure du produit en équilibre un jet d'air comprimé orienté vers la face de déversement choisie 15 ou 16, les produits déversés étant ensuite transportés séparément, par l'intermédiaire des toboggans 17 et 18 et des transporteurs de sortie 9 et 10, jusqu'aux appareils aval respectifs.

D'après ce qui précède, la commande sélective des électrovannes permet de choisir à volonté le côté ou la face de basculement 15 ou 16 pour chaque produit se présentant en équilibre sur l'arête 12, sous l'effet de la vitesse communiquée par le transporteur d'entrée 4. Par conséquent, on peut faire varier de 0 à 100 % le nombre des produits déversés sur l'un des toboggans 17 ou 18 par rapport au nombre des produits pénétrant dans le déversoir 1, le nombre des produits déversés sur l'autre toboggan correspondant à la différence ou au complément à 100 %. Cette variation du pourcentage des produits déversés sur un toboggan par rapport à l'autre peut évidemment être modifiée pendant le fonctionnement de l'ensemble précédemment décrit, par exemple sous la commande de palpeurs disposés à l'entrée des machines aval.

Cependant, selon une forme de réalisation préférée, le distributeur 23 comprend un conduit fixe 24 qui est monté transversalement au-dessus du dièdre 11 et qui est continuellement alimenté en air comprimé par la source 22. Le conduit 24 est fermé à son extrémité 25 et comporte, au niveau de sa face inférieure 26, deux orifices 27 et 28 ménagés chacun à l'aplomb de l'une des faces 15 et 16 du dièdre. En outre, le distributeur 23 comprend un manchon rotatif 29 entourant le conduit 24 avec un faible jeu au niveau de la face inférieure 26 de ce dernier et comportant des lumières périphériques alternées 30 et 31 ménagées respectivement en regard des orifices 27 et 28 du conduit 24.

Lorsqu'on fait tourner le manchon 29, sa paroi forme un obturateur vis-à-vis des orifices 27 et 28 jusqu'à ce qu'une lumière 30 ou 31 passe en regard de l'un de ces orifices, permettant ainsi à l'air comprimé de s'échapper vers le bas et de former un jet 32 provoquant le basculement du produit alors en équilibre sur l'arête 12 du dièdre.

Il est évident que la rotation du manchon 29 est avantageusement synchronisée avec le mouvement du transporteur d'entrée 4, par exemple au moyen d'un ensemble 33 à courroie et poulies ou à chaîne et roues dentées reliant l'axe du manchon 29 à celui du rouleau 34 formant l'extrémité aval 3 du transporteur d'entrée 4. Dans ces conditions, on oriente le jet d'air alternativement vers les deux faces 15 et 16 du dièdre 11, de façon entièrement automatique, et l'on obtient deux files de sortie comportant un même nombre de produits.

Cette forme de réalisation préférée offre l'avantage qu'elle permet d'obtenir des cadences particulièrement élevées, atteignant par exemple 400 basculements par minute, mais il n'est plus possible de faire varier le pourcentage des produits déversés sur chacun des toboggans 17 et 18 sans remplacer le manchon 29, ce qui implique un arrêt momentané de l'ensemble de transfert.

Il y a lieu de noter que la longueur des lumières 30 et 31 tient généralement compte de la longueur et de la vitesse d'entrée des produits. Dans le cas représenté sur les figures 1 et 2, le pas des lumières 30 ou 31 associées à l'un des orifices 27 et 28 correspond au double du pas des produits, mais il est évidemment possible de modifier le nombre des lumières associées à chaque orifice ainsi que le diamètre du manchon rotatif 29. Par ailleurs, la forme et les dimensions des orifices 27 et 28 et des lumières 30 et 31 doivent être adaptées aux dimensions de la face supérieure des produits et, bien évidemment, à la distance séparant le manchon rotatif 29 de ladite face supérieure.

En outre, il est possible de combiner en série ou en parallèle une ou plusieurs des formes de réalisation précédemment décrites, notamment avec une ou plusieurs files de produits transportés sans dédoublement de file, permettant ainsi de multiplier le nombre des files ou de répartir le nombre des produits à volonté.

Il est bien entendu que la présente invention n'a été décrite et représentée qu'à titre explicatif mais nullement limitatif et qu'on pourra y apporter toute modification utile, notamment dans le domaine des équivalences techniques, sans sortir de son cadre tel que défini par les revendications.

**Revendications**

1. Procédé pour dédoubler une file de produits solides identiques pendant leur transfert entre un appareil débiteur amont et deux appareils récepteurs aval, les produits issus de l'appareil débiteur étant guidés en file et reposant à plat par leur face la plus large, procédé dans lequel on amène les produits provenant de l'appareil amont à passer successivement sur l'arête (12) d'un dièdre (11), sensiblement alignée avec l'axe de la file guidée, en leur conférant une vitesse rectiligne minimale, de telle sorte qu'ils se mettent sensiblement en équilibre sur ladite arête (12), l'on fait basculer chacun des produits sur une face de déversement (15) ou l'autre (16) du dièdre (11), et l'on transporte séparément les produits déversés jusqu'aux deux appareils aval respectifs, procédé caractérisé par le fait qu'on fait basculer lesdits produits en appliquant sélectivement sur la face supérieure du produit en équilibre sur ladite arête (12), un jet d'air comprimé orienté vers la face de déversement choisie.

2. Procédé suivant la revendication 1, caractérisé par le fait qu'on oriente le jet d'air alternativement vers les deux faces (15, 16) du dièdre (11) de façon automatique.

3. Dispositif pour la mise en œuvre du procédé suivant l'une des revendications 1 ou 2, comprenant essentiellement un déversoir (1) comportant une entrée (2) disposée en regard de l'extrémité aval (3) d'un transporteur d'entrée (4) associé à l'appareil débiteur amont et deux sorties (5, 6) disposées chacune en regard de l'extrémité amont (7 ou 8) d'un transporteur de sortie (9 ou 10) associé à l'un des appareils récepteurs aval, l'entrée du déversoir se présentant sous la forme d'un dièdre (11) dont l'arête (12) est sensiblement alignée avec l'axe (13) du transporteur d'entrée, caractérisé par le fait que l'entrée du déversoir est elle-même sensiblement alignée avec l'axe de symétrie du brin actif (14) de l'extrémité aval dudit transporteur d'entrée, que chacune des deux faces (15, 16) du dièdre est raccordée à un toboggan (17 ou 18) dont l'extrémité inférieure forme l'une des sorties du déversoir, et qu'un distributeur (23) relié à une source (22) d'air comprimé est monté transversalement au-dessus du dièdre et comporte deux buses d'éjection d'air orientées chacune vers l'une des faces du dièdre et obturables séparément.

4. Dispositif suivant la revendication 3, caractérisé par le fait qu'il comprend une électrovanne associée à chaque buse et commandée à distance.

5. Dispositif suivant la revendication 4, caractérisé par le fait que les électrovannes sont commandées par un ensemble de calcul électronique, éventuellement sous la dépendance d'un détecteur de présence des produits.

6. Dispositif suivant la revendication 3, caractérisé par le fait que le distributeur (23) comprend un conduit transversal fixe (24), continuellement alimenté en air comprimé et comportant au niveau de sa face inférieure (26) deux orifices (27, 28) ménagés chacun à l'aplomb de l'une des faces du dièdre, et un manchon rotatif (29) entourant le conduit avec un faible jeu au niveau de la face inférieure de ce dernier et comportant des lumières périphériques alternées (30, 31) ménagées respectivement en regard des orifices du conduit.

7. Dispositif suivant la revendication 6, caractérisé par le fait que la rotation du manchon (29) est synchronisée avec le mouvement du transporteur d'entrée (4).


**Claims**

1. Method for dividing a row of identical solid products during their transfer between an upstream delivery apparatus and two downstream receiving apparatuses, the products emerging from the delivery apparatus being guided in a row and resting flat on their largest surface, method in which the products coming from the upstream apparatus are brought to pass successively over the ridge (12) of a dihedral member (11), said ridge being substantially aligned with the axis of the guided row, by conferring a minimum rectilinear speed on them, so that they are led to successively come substantially in equilibrium on said ridge (12), each of the products is causes to tilt onto either one tipping surface (15) or the other (16) of the dihedral member (11), and the tipped products are transported separately up to the two respective upstream apparatuses, method characterized by causing said products to tilt by applying selectively to the upper surface of the product in equilibrium on said ridge (12), a compressed air jet oriented towards the selected tipping surface.

2. Method according to claim 1, characterized by orienting the air jet alternately towards one and the other tipping surfaces (15, 16) of the dihedral (11) automatically.

3. Device for carrying out the method as claimed in one of claims 1 or 2, comprising essentially tipping means (1) having an input (2) arranged facing the downstream end (3) of an input conveyor (4) associated with the upstream delivery apparatus and two outputs (5, 6) each arranged opposite the upstream end (7 or 8) of an output conveyor (9 or 10) associated with one of the downstream receiving apparatuses, the input of the tipping means having the form of a dihedral member (11) the ridge (12) of which is substantially aligned with the axis (13) of the input conveyor, characterized in that the input of the tipping means is itself substantially aligned with the axis of symmetry of the active strand (14) of the downstream end of said input conveyor, that each of the two surfaces (15, 16) of the dihedral member is joined to a toboggan run (17 or 18) the lower end of which forms one of the outputs of the tipping means, and that a distributor (23) connected to a source (22) of compressed air is mounted transversely above the dihedral member and comprises two air injection nozzles each oriented toward one of the surfaces of the dihedral member and separately obturatable.

4. Device as claimed in claim 3, characterized in that it comprises an electrovalve associated with each nozzle and remote controlled.

5. Device as claimed in claim 4, characterized in that the electrovalves are controlled by an electronic computing unit, if necessary depending on a detector for the presence of the products.

6. Device as claimed in claim 3, characterized in that the distributor (23) comprises a fixed transversal pipe (24), continually supplied with compressed air and having at the level of its lower surface (26) two orifices (27, 28) each formed straight above one of the surfaces of the dihedral member, and a rotary sleeve (29) surrounding the pipe with a slight clearance at the level of the lower surface thereof and having peripheral alternate ports (30, 31) respectively formed opposite the orifices of the pipe.

7. Device as claimed 6, characterized in that the rotation of the sleeve (29) is synchronized with the movement of the input conveyor (4).


**Patentansprüche**

1. Verfahren zum Aufteilen von gleichen, festen Gegenständen auf zwei Reihen während ihrer Übergabe zwischen einem stromaufwärts angeordneten Auslieferungsapparat und zwei stromabwärts gelegenen Aufnahmeapparaten, wobei die aus dem Auslieferungsapparat herkommenden Gegenstände mit ihrer breiteren Fläche flach aufliegend in einer Reihe geführt werden, bei welchem die aus dem stromaufwärts angeordneten Apparat herkommenden Gegenstände auf die mit der Achse der geführten Reihe etwa zusammenfallende Kante (12) eines Zweiflaches (11) mit einer minimalen geradlinigen Geschwindigkeit nacheinander laufen, damit sie auf dieser Kante (12) im wesentlichen ausgeglichen werden, wobei jeder der Gegenstände auf die eine (15) bzw. andere (16) Ableitfläche des Zweiflaches (11) umgekippt wird, und wobei die ausgetragenen Gegenstände bis zu den jeweiligen, stromabwärts gelegenen Apparaten gesondert abtransportiert werden, dadurch gekennzeichnet, dass die Gegenstände derart umgekippt werden, dass ein auf die gewählte Ableitfläche hin gerichteter Druckluftstrahl wahlweise auf die Oberfläche des auf der Kante (12) im Gleichgewicht gehaltenen Gegenstandes einwirkt.

2. Verfahren nach Anspruch 1, dadurch gekennzeichnet, dass der Luftstrahl automatisch und wechselweise auf die beiden Flächen (15, 16) des Zweiflaches (11) hin gerichtet wird.

3. Vorrichtung zur Durchführung des Verfahrens nach Anspruch 1 oder 2, bestehend im wesentlichen aus einer Überfallrinne (1) mit einem dem stromabwärts gelegenen Ende (3) eines mit dem stromaufwärts angeordneten Auslieferungsapparat zusammenwirkenden Einlaufförderers (4) gegenüber liegenden Eingang (2), sowie mit zwei Ausgängen (5, 6), von denen jeder dem stromaufwärts gelegenen Ende (7 bzw. 8) eines mit einem der stromabwärts angeordneten Aufnahmeapparaten zusammenwirkenden Auslaufförderers (9 bzw. 10) gegenüberliegt, wobei der Eingang der Überfallrinne die Form eines Zweiflaches (11) aufweist, dessen Kante (12) mit der Achse (13) des Einlaufförderers im wesentlichen zusammenfällt, dadurch gekennzeichnet, dass der Eingang der Überfallrinne selbst mit der Symmetrieachse des wirksamen Trumms (14) des stromabwärts gelegenen Endes des Einlaufförderers im wesentlichen zusammenfällt, dass jede der beiden Flächen (15, 16) des Zweiflaches mit einen Rutsche (17 bzw. 18) verbunden ist, deren unteres Ende einen der Ausgänge der Überfallrinne bildet, und dass ein mit einer Druckluftquelle (22) verbundener Verteiler (23) quer über dem Zweiflach angeordnet ist und zwei Luftausblasdüsen aufweist, die getrennt verschliesbar sind, und von denen jede auf die eine Fläche des Zweiflaches hin gerichtet ist.

4. Vorrichtung nach Anspruch 3, dadurch gekennzeichnet, dass sie ein jeder Duse zugeordnetes, ferngesteuertes Magnetventil aufweist.

5. Vorrichtung nach Anspruch 4, dadurch gekennzeichnet, dass die Magnetventile von einer elektronischen Recheneinheit ggf. abhängig von einem das Vorhandensein der Gegenstände feststellenden Sensor angesteuert werden.

6. Vorrichtung nach Anspruch 3, dadurch gekennzeichnet, dass der Verteiler (23) eine festangeordnete, querliegende Leitung (24) die ständig mit Druckluft gespeist wird und in Höhe ihrer unteren Seite (26) zwei Öffnungen (27, 28) aufweist, von denen jede senkrecht zu der einen Fläche des Zweiflaches eingebracht ist, sowie eine drehende Muffe (29), die die Leitung mit geringem Spiel im Bereich ihrer unteren Seite umgibt und abwechselnde Umfangsschlitze (30, 31) gegenüber den jeweiligen Öffnungen in der Leitung aufweist, besitzt.

7. Vorrichtung nach Anspruch 6, dadurch gekennzeichnet, dass die Drehung der Muffe (29) synchron mit der Bewegung des Einlaufförderers (4) stattfindet.

F I G.1

F I G.2

1